# EUROPEAN PATENT APPLICATION

(11) **EP 4 715 547 A1**
(43) Date of publication of application: **25.03.2026**
(21) Application number: 24858060.7
(22) Date of filing: 08.07.2024
(51) Int. Cl.: G06F 3/04815

(54) **DISPLAY METHOD, ELECTRONIC DEVICE, AND STORAGE MEDIUM**

(30) Priority: 01.09.2023 CN 202311135667
(71) Applicant: Huawei Technologies Co., Ltd., Shenzhen, Guangdong 518129 (CN)
(72) Inventor: ZHOU, Xueer, Shenzhen, Guangdong 518129 (CN); LI, Ronggen, Shenzhen, Guangdong 518129 (CN)
(74) Representative: Pfenning, Meinig & Partner mbB
(86) International application number: PCT/CN2024/104145
(87) International publication number: WO 2025/044516

(57) **Abstract**

Embodiments of this application provide a display method, an electronic device, and a storage medium, and relate to the field of electronic device technologies, to improve convenience of using a split-screen display function by a user. The display method includes: displaying a first interface in a first split-screen area, and displaying a second interface in a second split-screen area; detecting a first operation; displaying a third interface in response to the first operation, where the third interface is used to display a task in a first multi-task list corresponding to the first split-screen area, and the first multi-task list includes a first task; detecting a second operation performed on the first task in the third interface; and displaying an interface of the first task in the first split-screen area in response to the second operation.

## Description

This application claims priority to Chinese Patent Application No. 202311135667.8, filed with the China National Intellectual Property Administration on September 1, 2023 and entitled "DISPLAY METHOD, ELECTRONIC DEVICE, AND STORAGE MEDIUM", which is incorporated herein by reference in its entirety.

### TECHNICAL FIELD

This application relates to the field of electronic device technologies, and specifically, to a display method, an electronic device, and a storage medium.

### BACKGROUND

With development of electronic devices, a growing number of electronic devices can meet a multi-task use requirement of a user. For example, the user may use a split-screen display function of a foldable mobile phone to process different tasks. However, an existing split-screen display function is not convenient in some scenarios.

### SUMMARY

In view of this, this application provides a display method, an electronic device, and a storage medium, to improve convenience of using a split-screen display function by a user.

According to a first aspect, an embodiment of this application provides a display method, including: displaying a first interface in a first split-screen area, and displaying a second interface in a second split-screen area; detecting a first operation; displaying a third interface in response to the first operation, where the third interface is used to display a task in a first multi-task list corresponding to the first split-screen area, and the first multi-task list includes a first task; detecting a second operation performed on the first task in the third interface; and displaying an interface of the first task in the first split-screen area in response to the second operation.

When an electronic device is in a split-screen display state, display of a multi-task interface corresponding to a split-screen area on one side may be triggered based on the first operation. The split-screen area on the side may be triggered, based on selection of a task in the multi-task interface, to switch to an interface of the selected task, without affecting a split-screen area on the other side. In this way, switching of a single split-screen area is implemented via the multi-task interface, thereby improving convenience of using a split-screen display function by a user.

In a possible implementation, the method further includes: detecting a third operation; displaying a fourth interface in response to the third operation, where the fourth interface is used to display a task in a second multi-task list corresponding to the second split-screen area, and the second multi-task list includes a second task; detecting a fourth operation performed on the second task in the fourth interface; and displaying an interface of the second task in the second split-screen area in response to the fourth operation.

In a possible implementation, the first operation is a first operation performed on the first split-screen area; displaying the third interface includes: displaying the third interface in the first split-screen area; the second operation is a second operation performed on the second split-screen area; and displaying the fourth interface includes: displaying the fourth interface in the second split-screen area.

In a possible implementation, the method further includes: detecting a fifth operation; displaying a fifth interface in response to the fifth operation, where the fifth interface is used to display a third task list, the third multi-task list includes all tasks in the first multi-task list and the second multi-task list, and the third task list includes a fifth task and a combination of a third task and a fourth task; if a sixth operation performed on the combination of the third task and the fourth task in the fifth interface is detected, in response to the sixth operation, displaying an interface of the third task in the first split-screen area, and displaying an interface of the fourth task in the second split-screen area; and if a seventh operation performed on the fifth task in the fifth interface is detected, displaying an interface of the fifth task in full screen in response to the seventh operation.

In a possible implementation, before displaying the first interface in the first split-screen area, the method further includes: displaying the interface of the first task in the first split-screen area, and adding the first task to the first multi-task list.

In a possible implementation, before displaying the second interface in the second split-screen area, the method further includes: displaying the interface of the second task in the second split-screen area, and adding the second task to the second multi-task list.

In a possible implementation, the method further includes: displaying partial content of an application in a picture-in-picture area or a floating area; detecting an eighth operation performed on the picture-in-picture area or the floating area; and displaying an interface for complete content of the application in the first split-screen area or the second split-screen area in response to the eighth operation.

According to a second aspect, a display method is provided, including: displaying partial content of an application in a picture-in-picture area or a floating area; detecting an eighth operation performed on the picture-in-picture area or the floating area; and displaying an interface for complete content of the application in a first split-screen area or a second split-screen area in response to the eighth operation.

In this manner, a corresponding application task may be found based on a window corresponding to a picture-in-picture area or a floating area, and screen splitting of a corresponding application is triggered based on a specific gesture on the window, thereby improving convenience of using a split-screen display function by a user.

According to a third aspect, an electronic device is provided, including a processor and a memory. The memory is configured to store at least one instruction, and when the instruction is loaded and executed by the processor, the electronic device is enabled to perform the foregoing method.

According to a fourth aspect, a computer-readable storage medium is provided, including a program or instructions. When the program or the instructions are run on a computer, the foregoing method is performed.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a diagram of a multi-task interface of an electronic device in a related technology;
FIG. 2 is a diagram of displaying a floating window of an electronic device in a related technology;
FIG. 3 is a block diagram of a structure of an electronic device according to an embodiment of this application;
FIG. 4 is a diagram of a software architecture of an electronic device according to an embodiment of this application;
FIG. 5A to FIG. 5C are a diagram of an interface change of an electronic device according to an embodiment of this application;
FIG. 6A to FIG. 6C are a diagram of another interface change of an electronic device according to an embodiment of this application;
FIG. 7A to FIG. 7C are a diagram of another interface change of an electronic device according to an embodiment of this application;
FIG. 8A to FIG. 8C are a diagram of another interface change of an electronic device according to an embodiment of this application;
FIG. 9 is a schematic flowchart of a display method according to an embodiment of this application;
FIG. 10 is a diagram of a relationship between multi-task lists according to an embodiment of this application;
FIG. 11A and FIG. 11B are a diagram of another interface change of an electronic device according to an embodiment of this application;
FIG. 12 is a diagram of another relationship between multi-task lists according to an embodiment of this application;
FIG. 13A and FIG. 13B are a diagram of another interface change of an electronic device according to an embodiment of this application;

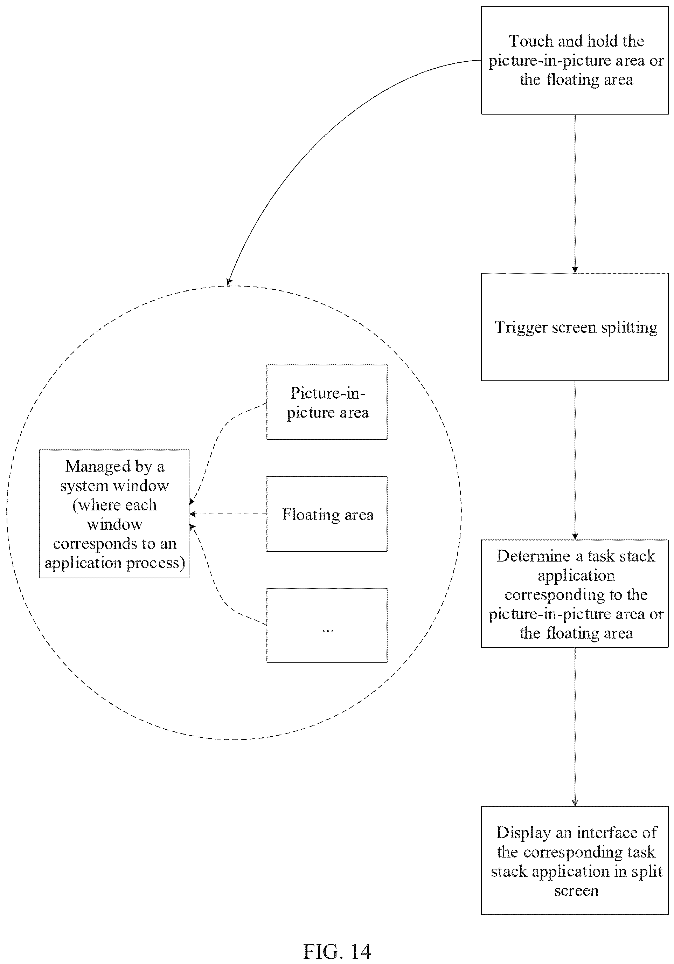

FIG. 14 is a schematic flowchart of triggering screen splitting according to an embodiment of this application; and
FIG. 15A and FIG. 15B are a diagram of another interface change of an electronic device according to an embodiment of this application.

### DESCRIPTION OF EMBODIMENTS

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of describing specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Before embodiments of this application are described, a related technology and a technical problem thereof are first described.

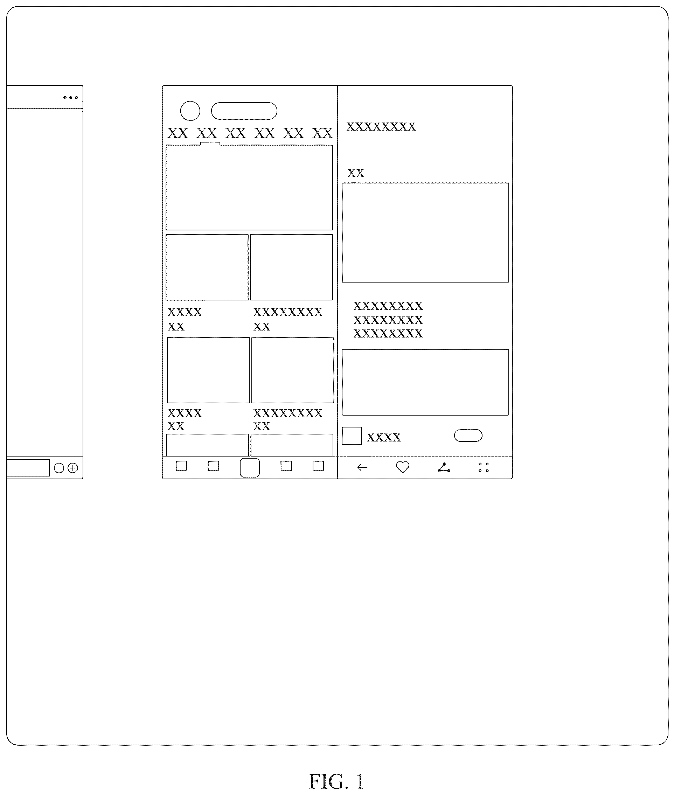

In a related technology, if a user wants to switch an electronic device in a split-screen state to another task interface in the background, the user may open a multi-task interface. As shown in FIG. 1, in the multi-task interface, the user may select a task combination corresponding to two split-screen areas to switch. However, if the user wants to switch only a task in one split-screen area without changing a task in the other split-screen area, a more complex procedure is required, and switching of a single split-screen area cannot be implemented via the multi-task interface. Consequently, convenience of using a split-screen display function by the user is low.

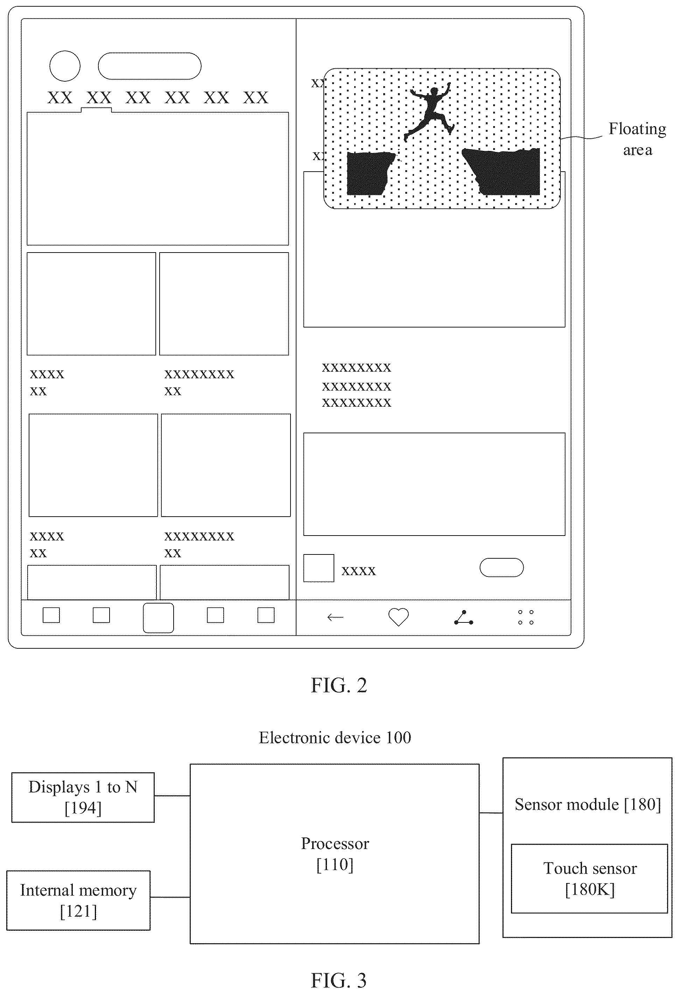

In addition, in the related technology, as shown in FIG. 2, when partial content of an application is displayed in a form of a picture-in-picture area or a floating area, a user needs a complex procedure to implement split-screen display for the content. Consequently, convenience of using a split-screen display function by the user is low.

To resolve the problems in the related technology, embodiments of this application provide the following technical solutions. The following describes the technical solutions in embodiments of this application.

FIG. 3 is a diagram of a structure of an electronic device 100.

The electronic device 100 may include a processor 110, an internal memory 121, a sensor module 180, a display 194, and the like. The sensor module 180 may include sensors such as a touch sensor 180K.

It may be understood that the structure shown in embodiments of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may be configured to store computer-executable program code. The executable program code includes instructions. The internal memory 121 may include a program storage area and a data storage area. The program storage area may store an operating system, an application needed by at least one function (for example, a voice playing function or an image playing function), and the like. The data storage area may store data (for example, audio data, and a phone book) created in a process of using the electronic device 100, and the like. In addition, the internal memory 121 may include a high-speed random access memory, and may further include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The touch sensor 180K is also referred to as a "touch component". The touch sensor 180K may be disposed on the display 194, and the touch sensor 180K and the display 194 form a touchscreen. The touchscreen is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the electronic device 100 at a position different from that of the display 194.

A software system of the electronic device 100 may use a layered architecture, an event-driven architecture, a microkernel architecture, a micro service architecture, or a cloud architecture. In an embodiment of the present invention, an Android system with a layered architecture is used as an example to describe a software structure of the electronic device 100.

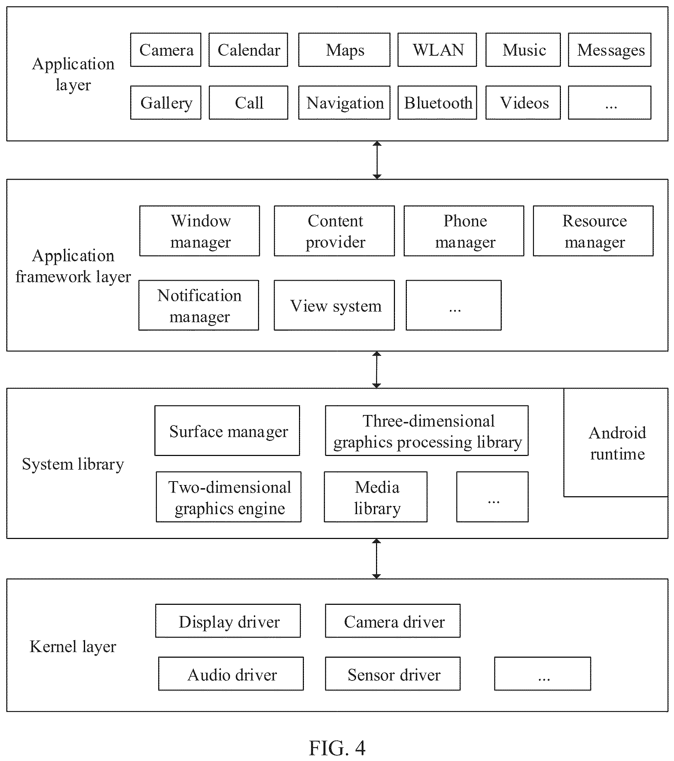

FIG. 4 is a block diagram of the software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Call, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answer, hang-up, or the like).

The resource manager provides various resources for an application, such as a localized character string, an icon, an image, a layout file, and a video file.

The notification manager enables an application to display notification information in the status bar, and may be configured to convey a message of a notification type. The message may automatically disappear after a short stay without a user interaction. For example, the notification manager is configured to notify download completion, give a message reminder, and the like. The notification manager may alternatively be a notification that appears in a top status bar of the system in a form of a graph or a scroll bar text, for example, a notification of an application running in the background, or may be a notification that appears on the screen in a form of a dialog window. For example, text information is prompted in the status bar, an alert tone is made, the electronic device vibrates, or an indicator light blinks.

The Android runtime includes a core library and a virtual machine. The Android runtime is responsible for scheduling and management of the Android system.

The core library includes two parts: One part is a function that needs to be invoked by Java language, and the other part is a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, PNG, and the like.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

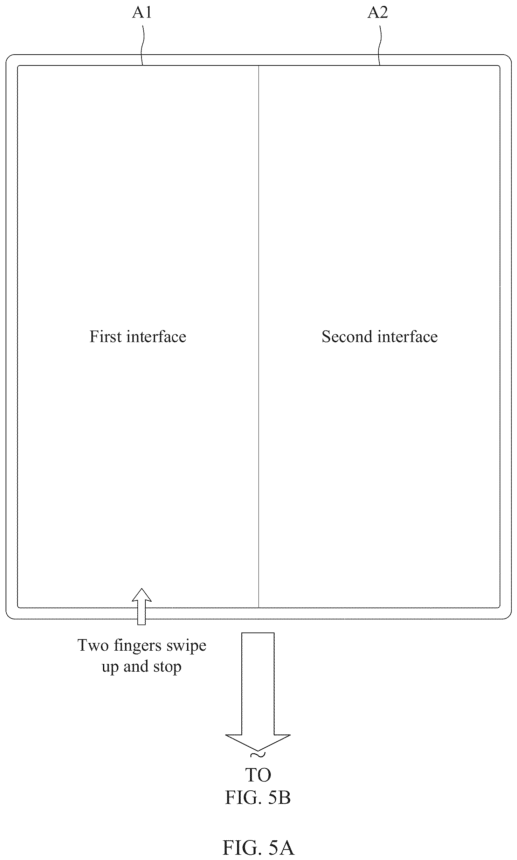

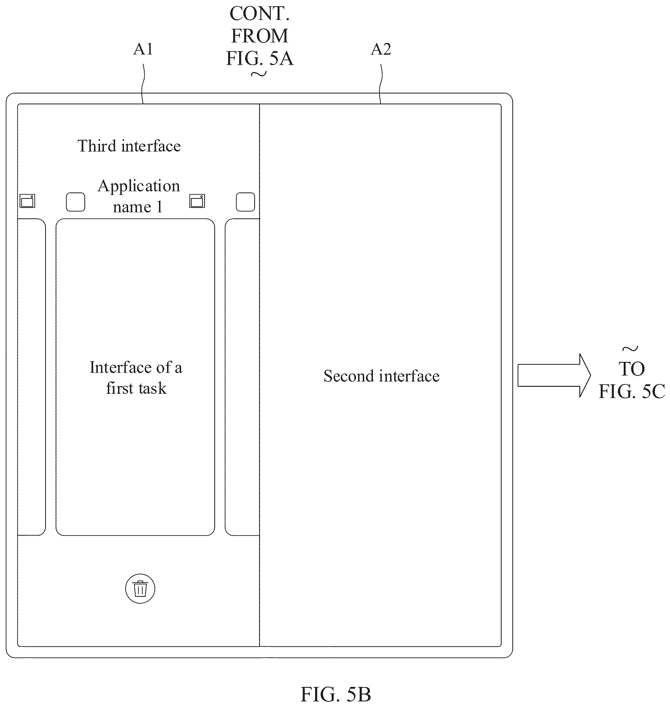

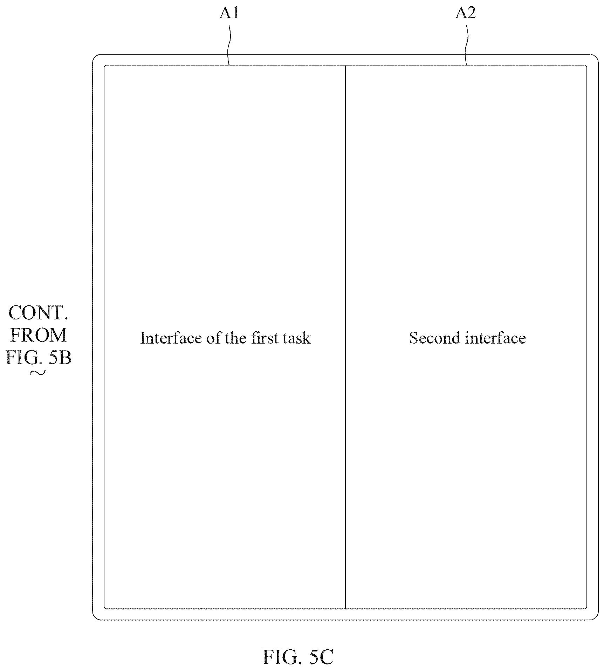

An embodiment of this application provides a display method. An execution body of the method may be the foregoing electronic device. As shown in FIG. 5A to FIG. 5C, the method includes: displaying a first interface in a first split-screen area A1, and displaying a second interface in a second split-screen area A2; detecting a first operation, where the first operation is, for example, a single-finger or two-finger swipe-up operation or a single-finger or two-finger swipe-up and stop operation performed at the bottom of the first split-screen area A1; displaying a third interface in response to the first operation, where the third interface is used to display a task in a first multi-task list corresponding to the first split-screen area A1, the first multi-task list includes a first task, the third interface may be referred to as a multi-task interface of the first split-screen area A1 or a recent task interface of the first split-screen area A1, for example, an interface of the first task and an application name corresponding to the first task are displayed in the middle of the third interface, the task in the first multi-task list is a recent task corresponding to the first split-screen area A1, that is, a background task corresponding to the first split-screen area A1, the task in the first multi-task list may be specifically a task that has been opened in the first split-screen area A1, the third interface may display at least a part of tasks in the first multi-task list, and the third interface may display a plurality of tasks in the first multi-task list in a scrolling manner based on a slide operation performed on the third interface, so that a user selects a task interface that needs to be switched to be displayed in the first split-screen area A1; detecting a second operation performed on the first task in the third interface, where the second operation is, for example, a tap operation performed on the interface of the first task in the third interface; and displaying the interface of the first task in the first split-screen area A1 in response to the second operation.

Specifically, a specific example is used for description. The electronic device is a foldable mobile phone, and the foldable mobile phone is in a left-right split-screen state. A first split-screen area A1 on the left displays a first interface of a browser application, and a second split-screen area A2 on the right displays a second interface of a video playing application. When watching a video via the second interface on the right, the user searches for a material via the web interface on the left. In this case, if the user expects to chat with another user without affecting video watching, the user may perform a two-finger swipe-up and stop operation at the bottom of the first split-screen area A1. In this case, a multi-task interface corresponding to the first split-screen area A1, that is, the third interface, is displayed. The recent task corresponding to the first split-screen area A1 is displayed in the third interface, where the third interface includes the interface of the first task, and the first task is an instant messaging application. In this case, the user taps an interface of the instant messaging application in the third interface, that is, the web interface previously displayed on the left side of the mobile phone may be switched to a chat interface of the instant messaging application, and the previous video interface is still retained on the right side of the mobile phone. The first multi-task list is related only to the first split-screen area A1, and is not related to the second split-screen area A2. The first multi-task list is used to manage a task corresponding to the first split-screen area A1. Therefore, based on selection of a task in the first multi-task list, interface switching is related only to the task displayed in the first split-screen area A1, and the second split-screen area A2 is not affected.

In addition, it should be noted that, embodiments of this application are described by using only a foldable mobile phone with two split screens as an example. However, a quantity of split screens is not limited in embodiments of this application. For example, the mobile phone may be split into three split-screen areas, or split into four split-screen areas. In embodiments of this application, the first split-screen area A1 and the second split-screen area A2 may be any two of a plurality of split screens whose quantities are not limited. In addition, the electronic device used in embodiments of this application is not limited to a foldable device, and embodiments of this application may be further applied to a bar-type mobile phone, a tablet, or the like. In addition, when embodiments of this application is applied to a foldable device, the foldable device is not limited to having only one folding axis. For example, the foldable device may alternatively be a tri-fold electronic device that has two folding axes or a quad-fold electronic device that has three folding axes. For example, the tri-fold electronic device may have three corresponding split-screen areas, and the quad-fold electronic device may have four corresponding split-screen areas. In other words, when the electronic device displays a plurality of split-screen areas, in response to a first operation at the bottom of any split-screen area, a multi-task interface corresponding to the split-screen area may be displayed, and the split-screen area may be switched, based on selection of a task in the multi-task interface, to display an interface of the selected task.

In embodiments of this application, when the electronic device is in a split-screen display state, display of a multi-task interface corresponding to a split-screen area on one side may be triggered based on the first operation. The split-screen area on the side may be triggered, based on selection of a task in the multi-task interface, to switch to an interface of the selected task, without affecting a split-screen area on the other side. In this way, switching of a single split-screen area is implemented via the multi-task interface, thereby improving convenience of using a split-screen display function by the user. In addition, the multi-task interface displayed in the split-screen area is a task corresponding to the split-screen area, so that the user can conveniently select and run the corresponding task in the corresponding split screen.

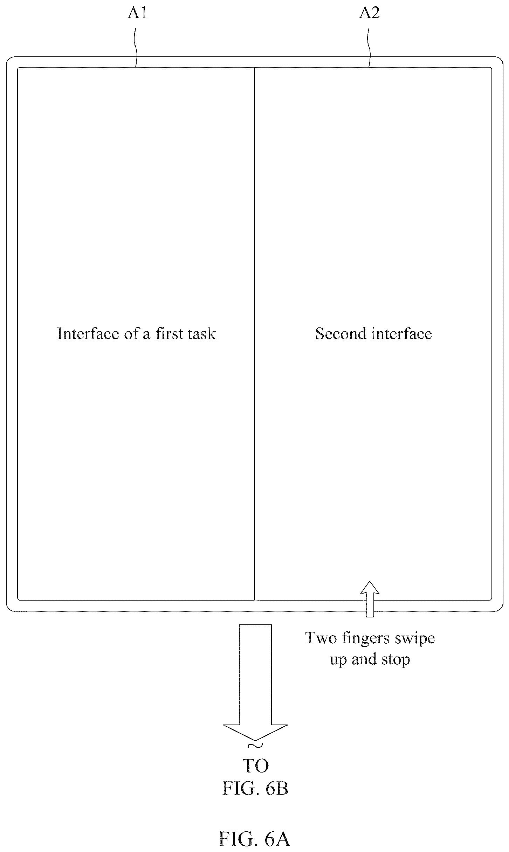

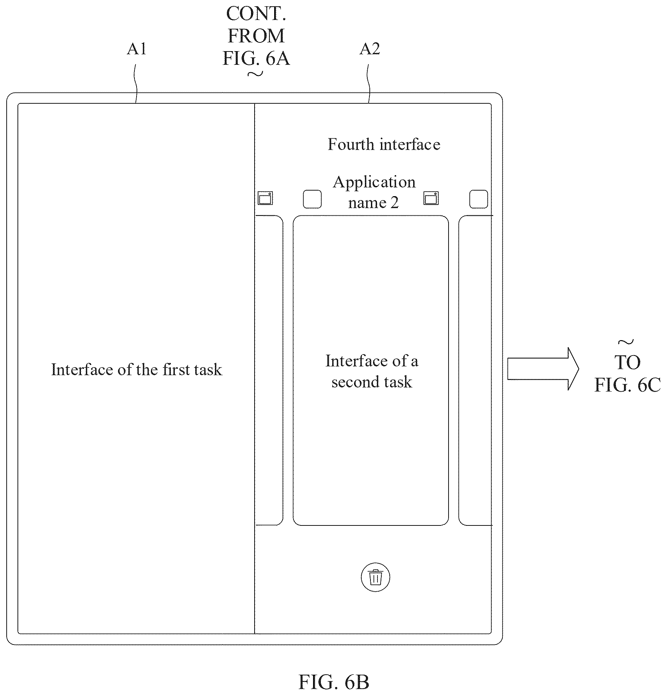

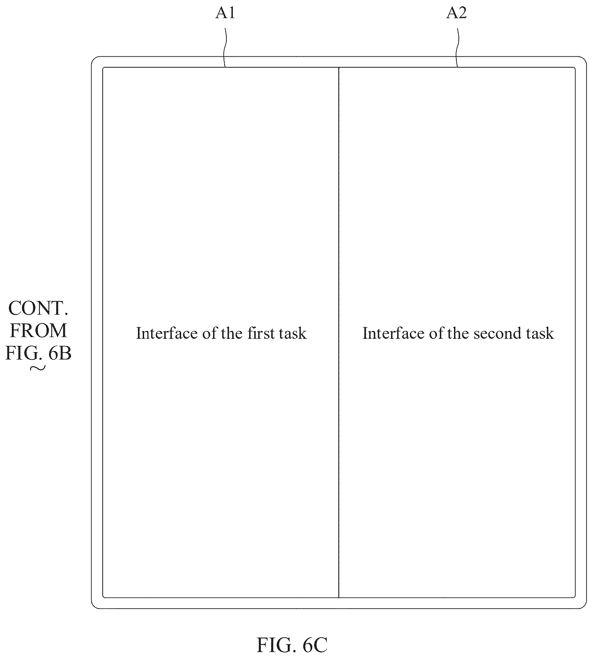

In some embodiments, as shown in FIG. 6A to FIG. 6C, the method further includes: detecting a third operation, where the third operation is, for example, a single-finger or two-finger swipe-up operation or a single-finger or two-finger swipe-up and stop operation performed at the bottom of the second split-screen area A2; displaying a fourth interface in response to the third operation, where the fourth interface is used to display a task in a second multi-task list corresponding to the second split-screen area A2, the second multi-task list includes a second task, the fourth interface may be referred to as a multi-task interface of the second split-screen area A2 or a recent task interface of the second split-screen area A2, for example, an interface of the second task and an application name corresponding to the second task are displayed in the middle of the fourth interface, the task in the second multi-task list is a recent task corresponding to the second split-screen area A2, that is, a background task corresponding to the second split-screen area A2, the fourth interface may display at least a part of tasks in the second multi-task list, and the fourth interface may display a plurality of tasks in the second multi-task list in a scrolling manner based on a slide operation performed on the fourth interface, so that the user selects a task interface that needs to be switched to be displayed in the second split-screen area A2; detecting a fourth operation performed on the second task in the fourth interface, where the fourth operation is, for example, a tap operation performed on the interface of the second task in the fourth interface; and displaying the interface of the second task in the second split-screen area A2 in response to the fourth operation.

Specifically, for example, the user has switched the first split-screen area A1 on the left side of the mobile phone to the chat interface of the instant messaging application, that is, the interface of the first task, and the second split-screen area A2 on the right side of the mobile phone displays the video interface, that is, the second interface. In this case, if online shopping is expected to be performed while chatting, a two-finger swipe-up and stop operation may be performed at the bottom of the second split-screen area A2. In this case, a multi-task interface corresponding to the second split-screen area A2, that is, the fourth interface, is displayed. The recent task corresponding to the second split-screen area A2 is displayed in the fourth interface, where the interface includes the interface of the second task, and the second task is a shopping application. In this case, the user taps an interface of the shopping application in the fourth interface, that is, the video interface previously displayed on the right side of the mobile phone may be switched to the interface of the shopping application, and the previous chat interface is still retained on the left side of the mobile phone. The second multi-task list is related only to the second split-screen area A2, and is not related to the first split-screen area A1. The second multi-task list is used to manage a task corresponding to the second split-screen area A2. Therefore, based on selection of a task in the second multi-task list, interface switching is related only to a task displayed in the second split-screen area A2, and the first split-screen area A1 is not affected. In other words, the first multi-task list and the second multi-task list manage respective tasks corresponding to different split-screen areas, and interfaces of tasks displayed in the different split-screen areas may be independently switched by selecting tasks in the two split-screen areas.

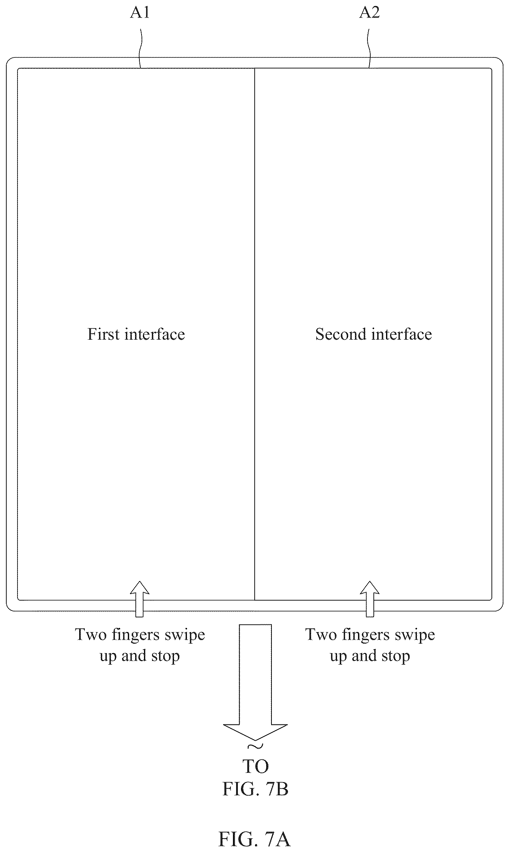

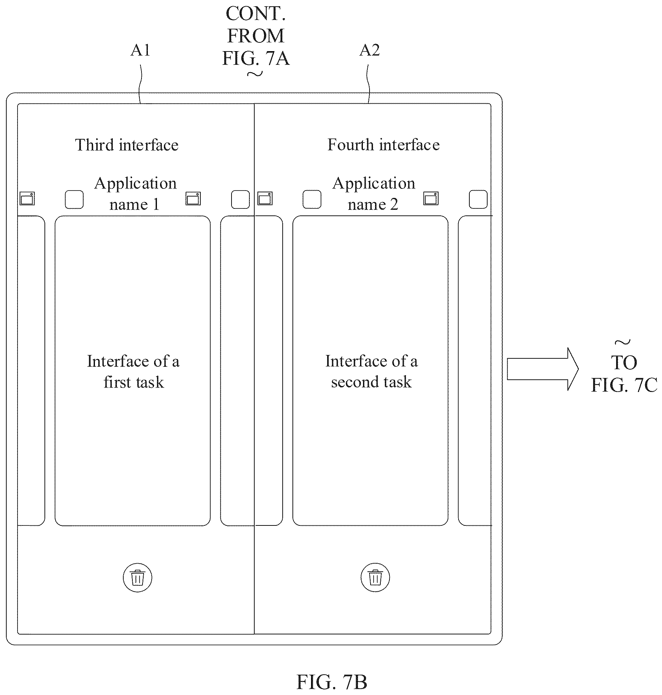

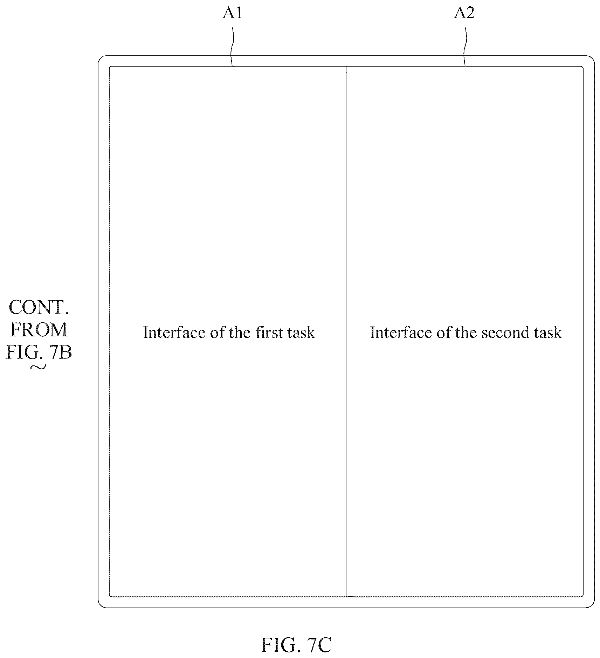

In the foregoing embodiment, the user first switches the left interface of the mobile phone to the chat interface by selecting a task in the third interface, and then switches the right interface of the mobile phone to the shopping interface by selecting a task in the fourth interface. This switching sequence is merely an example. An execution sequence of the foregoing methods is not limited in embodiments of this application. For example, as shown in FIG. 7A to FIG. 7C, the fourth interface may also be displayed based on a two-finger swipe-up and stop operation performed by the user at the bottom of the second split-screen area A2 when the third interface is displayed based on a two-finger swipe-up and stop operation performed at the bottom of the first split-screen area A1. In this case, the user may select the first task in the third interface, and select the second task in the fourth interface, to switch the first split-screen area A1 from displaying the first interface to displaying the interface of the first task, and switch the second split-screen area A2 from displaying the second interface to displaying the interface of the second task.

In some embodiments, the first operation is a first operation performed on the first split-screen area A1; displaying the third interface includes: displaying the third interface in the first split-screen area A1; the second operation is a second operation performed on the second split-screen area A2; and displaying the fourth interface includes: displaying the fourth interface in the second split-screen area A2.

Specifically, for example, corresponding hot spots may be set for different split-screen areas. It is assumed that the hot spot corresponding to the first split-screen area A1 is the bottom of the first split-screen area A1, the first operation is a specific operation performed on the hot spot corresponding to the first split-screen area A1, and the specific operation is, for example, a two-finger swipe-up and stop operation. The hot spot corresponding to the second split-screen area A2 is the bottom of the second split-screen area A2, and the second operation is a specific operation performed on the hot spot corresponding to the second split-screen area A2, for example, a two-finger swipe-up and stop operation. To be specific, when the user performs a two-finger swipe-up and stop gesture operation at the bottom of the first split-screen area A1, the mobile phone is triggered to display the third interface in the first split-screen area A1. When the user performs a two-finger swipe-up and stop gesture operation at the bottom of the second split-screen area A2, the mobile phone is triggered to display the fourth interface in the second split-screen area A2. In one aspect, an operation position for triggering a multi-task interface corresponding to a split-screen area is set in the corresponding split-screen area, so that the user can perform an operation in a targeted manner. In another aspect, a display position of the multi-task interface is set in the corresponding split-screen area, so that a correspondence between a to-be-selected task and the split-screen area can be intuitively displayed.

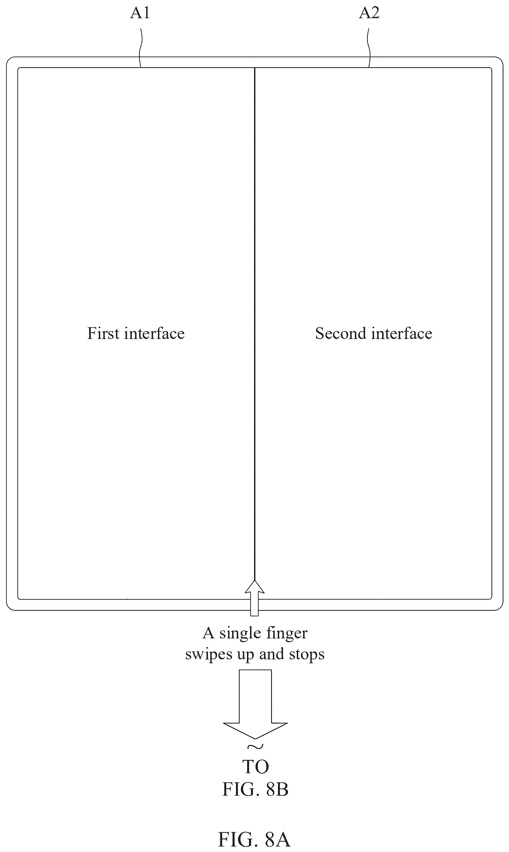

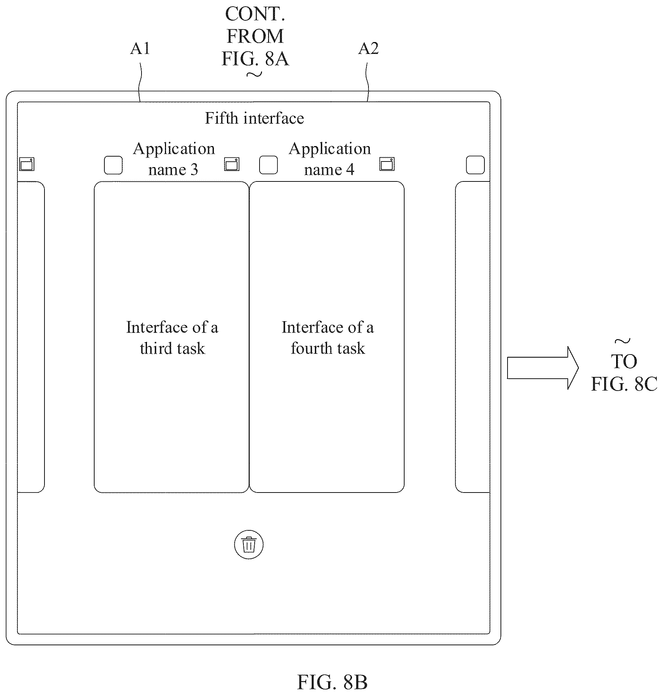

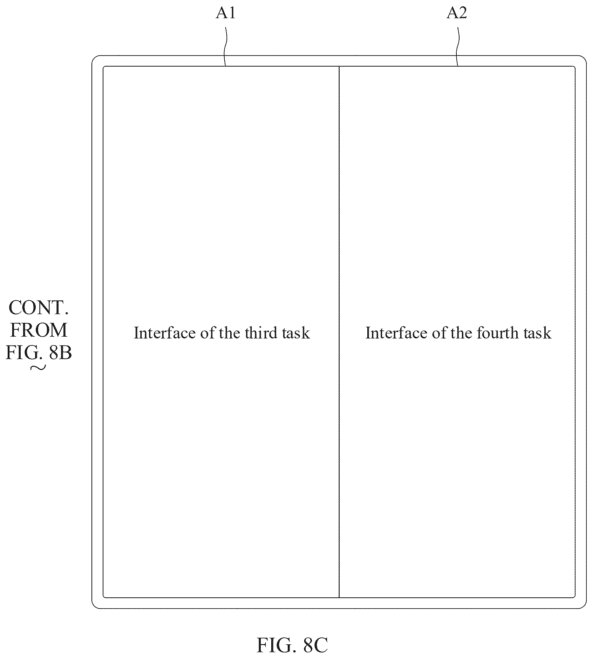

In some embodiments, as shown in FIG. 8A to FIG. 8C, the method further includes: detecting a fifth operation, where the fifth operation is, for example, a single-finger swipe-up and stop operation performed at the bottom of the screen; displaying a fifth interface in response to the fifth operation, where the fifth interface is used to display a third task list, the third multi-task list includes all tasks in the first multi-task list and the second multi-task list, and the third task list includes a fifth task and a combination of a third task and a fourth task; if a sixth operation performed on the combination of the third task and the fourth task in the fifth interface is detected, in response to the sixth operation, displaying an interface of the third task in the first split-screen area A1, and displaying an interface of the fourth task in the second split-screen area A2, where an interface of the fifth task is not shown in FIG. 8A to FIG. 8C, and tasks in the fifth interface may be displayed in a scrolling manner based on a slide operation performed on the fifth interface; and when an interface of the fifth task is displayed in the fifth interface, if a seventh operation performed on the fifth task in the fifth interface is detected, displaying the interface of the fifth task in full screen in response to the seventh operation. The third task list is a global task list, and is used to manage a split-screen task and a full-screen task. The split-screen task is a task corresponding to the first split-screen area A1 and the second split-screen area A2, and the full-screen task is a task running in a non-split-screen state. Both the third task and the fourth task are split-screen tasks, and the fifth task is a full-screen task. A process shown in FIG. 8A to FIG. 8C is a process of switching based on a multi-task interface in a related technology. In other words, in embodiments of this application, in addition to performing task switching in an independent split-screen area for different split-screen areas separately via a corresponding multi-task interface, task switching may also be performed via a global multi-task interface, for example, switching to another split-screen combination interface or another single application interface.

In some embodiments, before displaying the first interface in the first split-screen area A1, the method further includes: displaying the interface of the first task in the first split-screen area A1, and adding the first task to the first multi-task list.

In some embodiments, before displaying the second interface in the second split-screen area A2, the method further includes: displaying the interface of the second task in the second split-screen area A2, and adding the second task to the second multi-task list.

Specifically, in other words, a task in the first task list comes from a task that has been displayed in the first split-screen area A1, that is, the first task list is used to manage a recent task corresponding to the first split-screen area A1, and a task in the second task list comes from a task that has been displayed in the second split-screen area A2, that is, the second task list is used to manage a recent task corresponding to the second split-screen area A2.

In some embodiments, when an interface of a current task displayed in the first split-screen area A1 is switched to the background, the first multi-task list is updated based on the task; and when an interface of a current task displayed in the second split-screen area A2 is switched to the background, the second multi-task list is updated based on the task.

A specific example is used for description below.

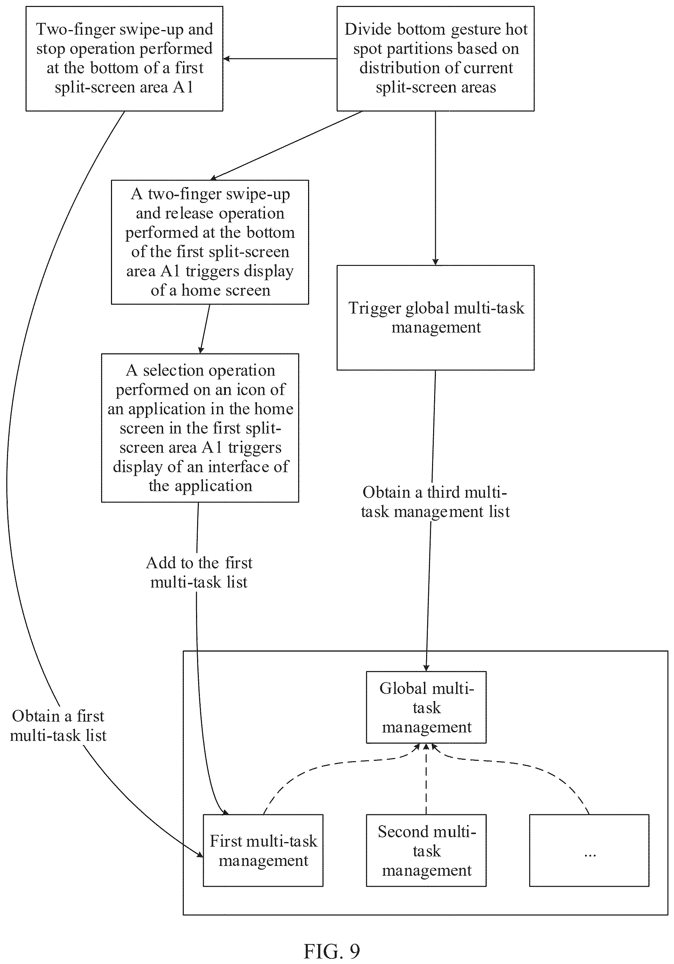

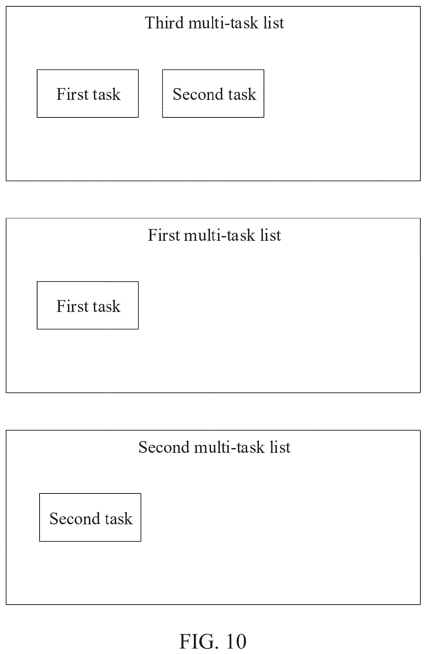

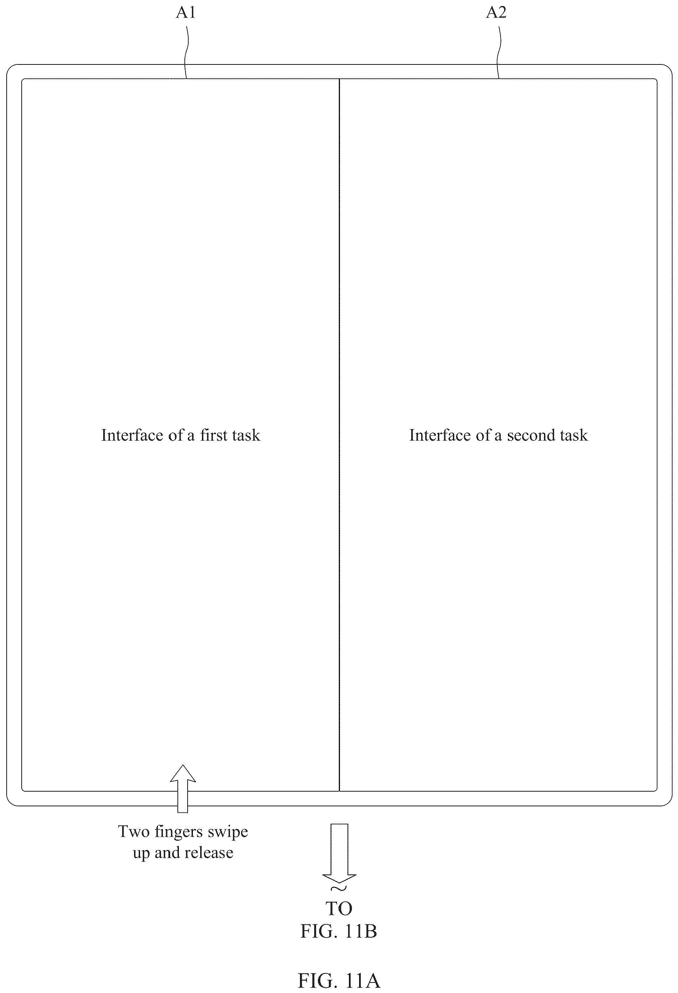

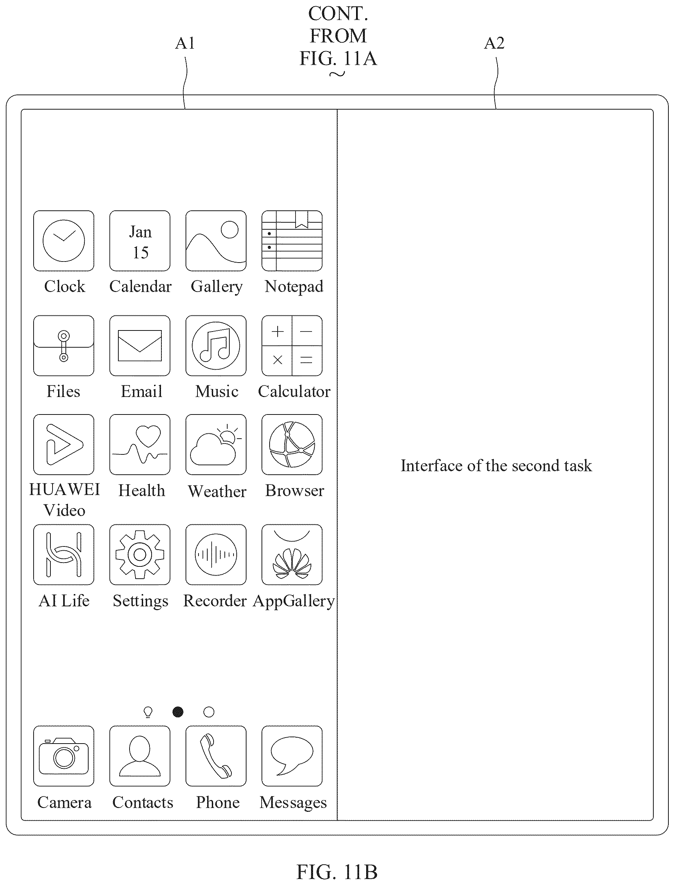

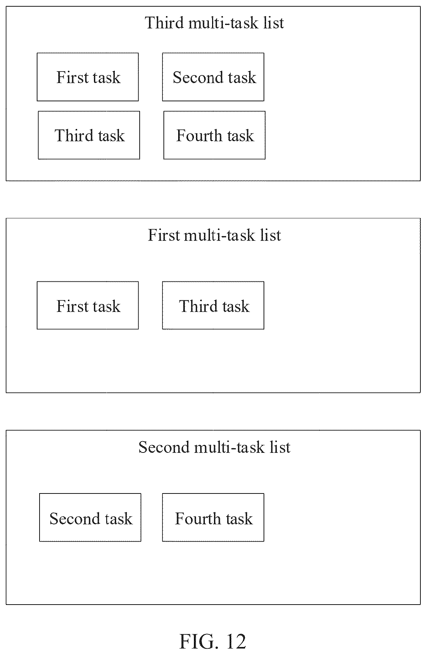

First, the user controls the electronic device to perform split-screen display. Herein, two split screens are used as an example. To be specific, a screen of the electronic device is divided into two split-screen areas: a first split-screen area A1 and a second split-screen area A2. In another possible implementation, the screen may be further divided into more split-screen areas. After the screen splitting, position and size information of each split-screen area is managed and stored by a system split-screen service, and is updated with adjustment of a split-screen size. FIG. 9 shows only a procedure of triggering display of a third interface via a first split-screen area A1. In a split-screen display process, bottom gesture hot spot partitions may be divided based on distribution of current split-screen areas. For example, the first split-screen area A1 and the second split-screen area A2 are areas on the left side and the right side of the screen, the bottom of the first split-screen area A1 is divided as a gesture hot spot corresponding to the first split-screen area A1, and the bottom of the second split-screen area A2 is divided as a gesture hot spot corresponding to the second split-screen area A2. In a split-screen display process, global multi-task management is triggered to obtain a third multi-task management list, and the global multi-task management is performed. The global multi-task management triggers first multi-task management and second multi-task management. The first multi-task management creates a corresponding first multi-task list for the first split-screen area A1, and the second multi-task management creates a corresponding second multi-task list for the second split-screen area A2. The two multi-task lists are used to separately record application tasks on corresponding split screens. The global third multi-task list manages all application tasks. As shown in FIG. 10, during first screen splitting, if an interface of a first task is displayed in the first split-screen area A1, the first task is added to the first multi-task list, and if an interface of a second task is displayed in the second split-screen area A2, the second task is added to the second multi-task list. In this case, the third multi-task list also includes the first task and the second task. As shown in FIG. 11A and FIG. 11B, after split-screen display, the electronic device detects, for example, a two-finger swipe-up and release operation performed at the bottom of the first split-screen area A1, and displays a home screen in the first split-screen area A1 in response to the operation. The home screen is an interface of a desktop application, and a plurality of application icons are displayed in the home screen. The electronic device detects a selection operation performed on an icon of an application in the home screen in the first split-screen area A1, and displays, in the first split-screen area A1 in response to the operation, an interface of the selected application, for example, a first interface. Similarly, after split-screen display, the electronic device detects, for example, a two-finger swipe-up and release operation performed at the bottom of the second split-screen area A2, and displays a home screen in the second split-screen area A2 in response to the operation. The electronic device detects a selection operation performed on an icon of an application in the home screen in the second split-screen area A2, and displays, in the second split-screen area A2 in response to the operation, an interface of the selected application, for example, a second interface. As shown in FIG. 12, applications opened in different split screens are managed by respective multi-task lists, and the global multi-task list manages all tasks. Then, if a two-finger swipe-up and stop operation performed at the bottom of the first split-screen area A1 is detected, the first multi-task list is obtained, and a multi-task interface corresponding to the first split-screen area A1 is displayed. For a specific process, refer to FIG. 5A to FIG. 5C and records of the corresponding embodiment. Similarly, the second split-screen area A2 may also have four types of processes. For details, refer to FIG. 6A to FIG. 6C and records of the corresponding embodiment. Similarly, an original system gesture, for example, a single-finger swipe-up and stop gesture, may still trigger obtaining, from the third task list, a global multi-task interface corresponding to task display. For details, refer to FIG. 6A to FIG. 6C and records of the corresponding embodiment. In other words, after the mobile phone performs screen splitting, each split-screen area may independently return to a desktop and enter a recent task interface through gesture interaction, and specified gesture interaction corresponds to each split-screen hot spot. Different from global recent task management, the split-screen area independently manages a recent task list, and each split-screen area has its own recent task management.

In addition, specific operations of the foregoing gesture operations are not limited in embodiments of this application. Herein, a set of gestures for triggering display of a multi-task interface and triggering a feedback desktop is used as an example for description. For example, the first operation is a two-finger swipe-up and stop operation performed at the bottom of the first split-screen area A1, the third operation is a two-finger swipe-up and stop operation performed at the bottom of the second split-screen area A2, and the fifth operation is a single-finger swipe-up and stop operation performed at the bottom of the screen. In a possible implementation, for the user, if two fingers of the user swipe up from the bottom of the left split screen and stop, a multi-task interface corresponding to the left split screen is displayed, to independently switch a task in the left split screen; if two fingers swipe up from the bottom of the left split screen and release, the desktop is displayed in the left split-screen area, to independently run a new application in the left split-screen area; if two fingers swipe up from the bottom of the right split screen and stop, a multi-task screen corresponding to the right split screen is displayed, to independently switch a task in the right split screen; if two fingers swipe up from the bottom of the right split screen and release, the desktop is displayed in the right split-screen area, to independently run a new application in the right split-screen area; if a single finger swipes up from the bottom of any split screen and stops, the global multi-task interface is displayed; and if a single finger swipes up from the bottom of any split screen and releases, the desktop is displayed in full screen.

In other words, the split-screen multi-task interface and the global multi-task interface may be distinguished based on different gestures. In addition, different types of task interfaces may also be displayed based on different hot spots. For example, a bottom area of a screen is divided into a left bottom area, a middle bottom area, and a right bottom area. The first operation is a single-finger swipe-up and stop operation performed on the left bottom area, the third operation is a single-finger swipe-up and stop operation performed on the right bottom area, and the fifth operation is a single-finger swipe-up and stop operation performed on the middle bottom area. The single-finger swipe-up and stop operation herein is merely an example, and may also be replaced with another gesture operation like a two-finger swipe-up and stop operation. In other words, display of the multi-task interface may be triggered based on a same gesture operation, and different types of multi-task interfaces are distinguished and displayed based on different gesture hot spots.

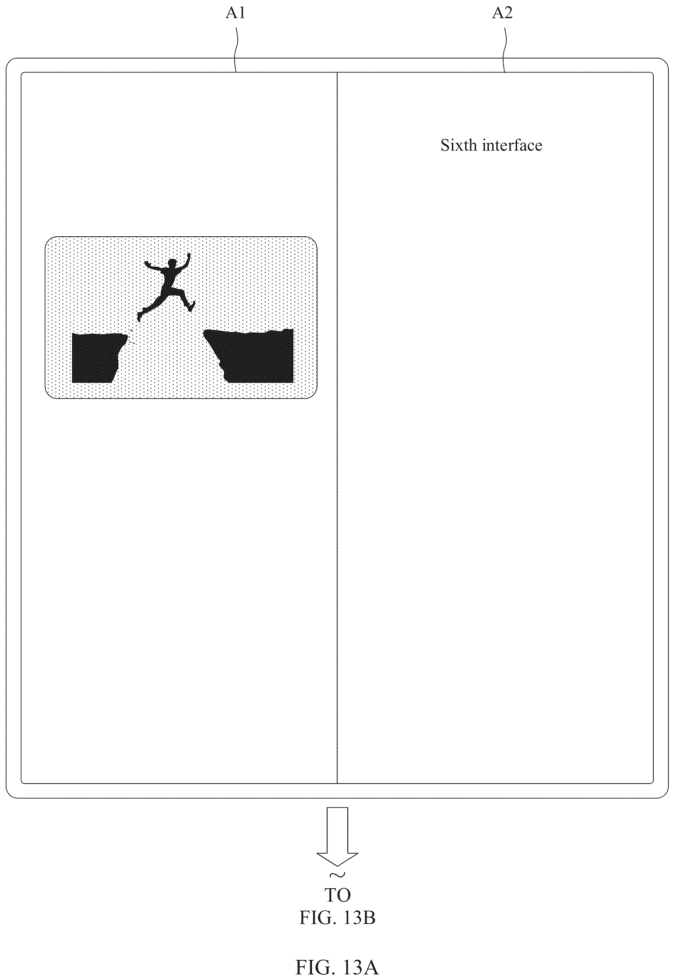

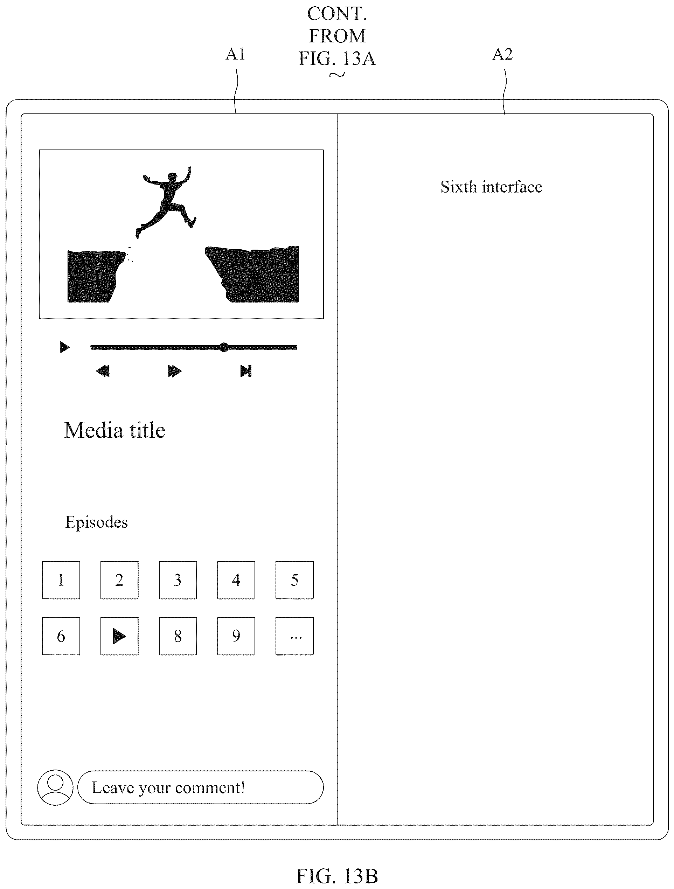

In some embodiments, the method further includes: displaying partial content of an application in a picture-in-picture area or a floating area, where the picture-in-picture area or the floating area displays a part of UI drawing content of the application rather than a complete zoom-out interface of the application. As shown in FIG. 13A and FIG. 13B, video content is displayed in the picture-in-picture area or the floating area. That the picture-in-picture area or the floating area shown in FIG. 13A and FIG. 13B is located in the first split-screen area A1 is merely an example. The picture-in-picture area or the floating area may be located at any position. The picture-in-picture area or the floating area is not necessarily in a split-screen state, and may also be a picture-in-picture area or a floating area with a full-screen desktop or a full-screen application as a background. A difference between a picture-in-picture area display and a floating area display lies in that a floating area display function does not need an application to grant permission, but the picture-in-picture area display needs an application to grant permission. The method further includes: detecting an eighth operation performed on the picture-in-picture area or the floating area, where the eighth operation is an operation related to the first split-screen area A1, for example, an operation of touching and holding the picture-in-picture area or the floating area and dragging the area to a hot spot corresponding to the first split-screen area A1; and displaying an interface for complete content of the application in the first split-screen area A1 in response to the eighth operation. It may be understood that, if the eighth operation is an operation of touching and holding the picture-in-picture area or the floating area and dragging the area to a hot spot corresponding to the second split-screen area A2, the interface for complete content of the application is triggered to be displayed in the second split-screen area A2.

Specifically, if the picture-in-picture area or the floating area is displayed in a full-screen state, a touch and hold operation triggers screen splitting, to display the first split-screen area A1 and the second split-screen area A2, and enable the picture-in-picture area or the floating area to enter a dragged state. In this case, if the picture-in-picture area or the floating area is dragged to a hot spot corresponding to a split-screen area, an interface for complete content of an application corresponding to the picture-in-picture area or the floating area is triggered to be displayed in the split-screen area. In this case, display content of the other split-screen area is not limited. For example, a background interface of the picture-in-picture area or the floating area displayed in the full-screen state may be displayed, or a preset interface may be displayed, or another interface of an application corresponding to the picture-in-picture area or the floating area may be displayed. If the picture-in-picture area or the floating area is displayed in the split-screen state, a touch and hold operation causes the picture-in-picture area or the floating area to enter the dragged state. In this case, if the picture-in-picture area or the floating area is dragged to a hot spot corresponding to a split-screen area, an interface for complete content of an application corresponding to the picture-in-picture area or the floating area is triggered to be displayed in the split-screen area. In this case, display content of the other split-screen area may remain unchanged. The picture-in-picture area is a picture-in-picture window, and the floating area is a floating window. The picture-in-picture area and the floating area are managed by a system window, and each window corresponds to an application process. For content displayed in the picture-in-picture area or the floating area, the user may trigger screen splitting through a specific gesture operation performed on the area, for example, touching and holding the picture-in-picture area or the floating area. After screen splitting is triggered, a task stack application corresponding to the picture-in-picture area or the floating area is searched for and determined, and then an interface of the corresponding task stack application is displayed in split screen. For example, the electronic device currently displays the first split-screen area A1 on the left and the second split-screen area A2 on the right, and a video that is being played is displayed in a floating area in the first split-screen area A1 on the left. After the user touches and holds the floating area and drags the floating area to a hot spot corresponding to the first split-screen area A1, screen splitting of the floating area is triggered, that is, an application corresponding to the video displayed in the floating area is searched for, and an interface for complete content corresponding to the video is displayed in the first split-screen area A1. In this manner, a corresponding application task may be found based on a window corresponding to a picture-in-picture area or a floating area, and screen splitting of a corresponding application is triggered based on a specific gesture on the window, thereby improving convenience of using a split-screen display function by the user.

In some embodiments, as shown in FIG. 13A and FIG. 13B, for example, the picture-in-picture area or the floating area is displayed in the split-screen state, a sixth interface is displayed in the second split-screen area A2; and displaying the interface for complete content of the application in the first split-screen area A1 in response to the eighth operation includes: in response to the eighth operation of touching and holding the picture-in-picture area or the floating area and dragging the area to the hot spot corresponding to the first split-screen area A1, displaying the interface for complete content of the application in the first split-screen area A1, and displaying the sixth interface in the second split-screen area A2. In this manner, content displayed in the split-screen area on the other side is not affected.

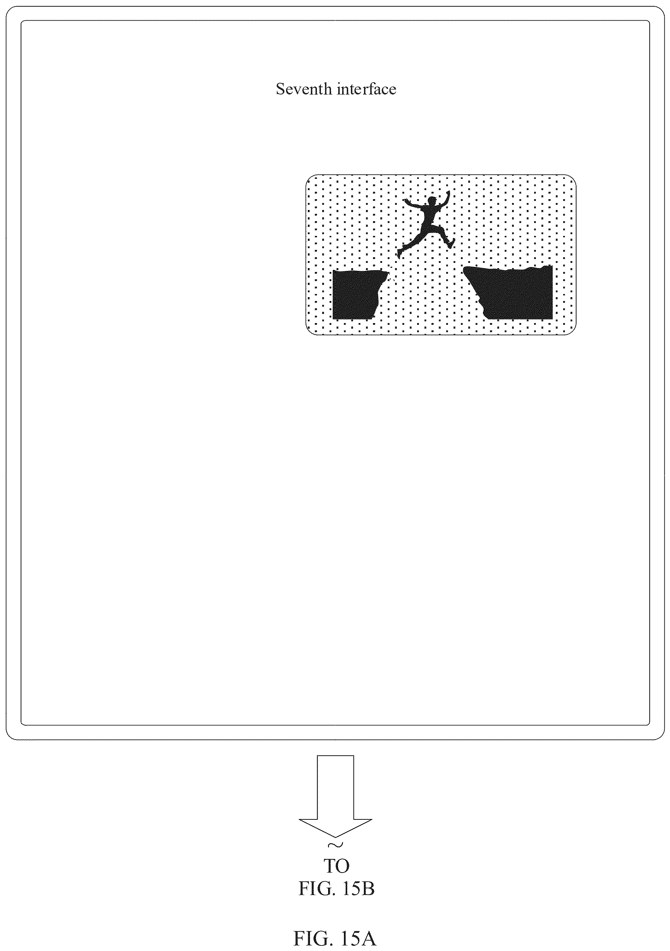

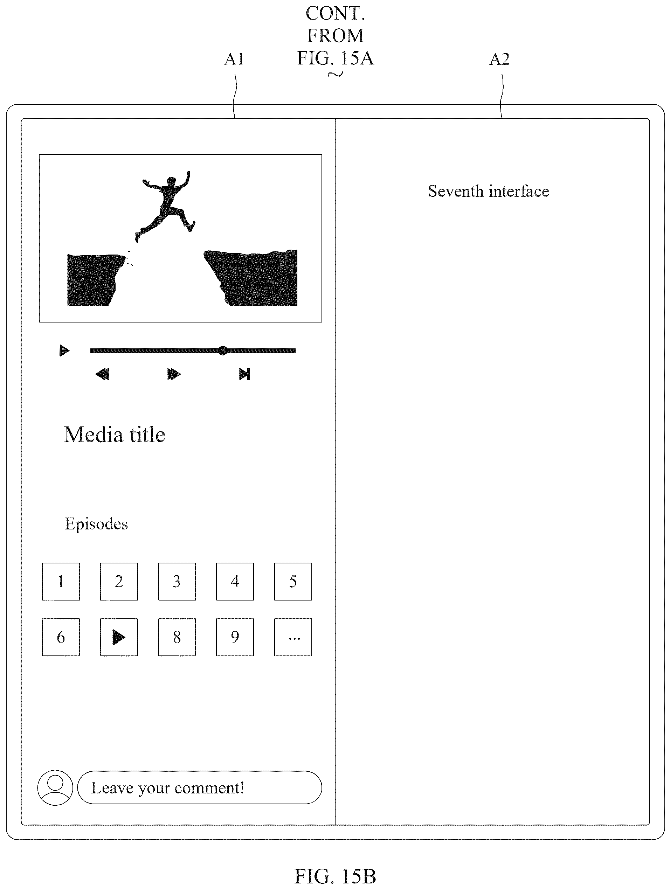

In some embodiments, as shown in FIG. 15A and FIG. 15B, the picture-in-picture area or the floating area may also be displayed in the non-split screen case. For example, when the electronic device displays the picture-in-picture area or the floating area in the non-screen splitting state, the eighth operation of touching and holding the picture-in-picture area or the floating area and dragging the area to the hot spot corresponding to the first split-screen area A1 is detected. In response to the eighth operation, screen splitting is triggered, the interface for complete content of the application is displayed in the first split-screen area A1, and a previous non-split-screen interface may be displayed in the second split-screen area A2.

As shown in FIG. 13A and FIG. 13B, an embodiment of this application further provides a display method, including: displaying partial content of an application in a picture-in-picture area or a floating area; detecting an eighth operation of touching and holding the picture-in-picture area or the floating area and dragging the area to a hot spot corresponding to a first split-screen area A1; and displaying an interface for complete content of the application in the first split-screen area A1 in response to the eighth operation. It may be understood that, if the eighth operation is an operation of touching and holding the picture-in-picture area or the floating area and dragging the area to a hot spot corresponding to the second split-screen area A2, the interface for complete content of the application is triggered to be displayed in the second split-screen area A2. A difference between the display method in this embodiment and the display method in the foregoing embodiment lies in that this embodiment of this application does not depend on switching via a multi-task interface, and is an independent display method for triggering screen splitting via a picture-in-picture area or a floating area. In this manner, a corresponding application task may be found based on a window corresponding to a picture-in-picture area or a floating area, and screen splitting of a corresponding application is triggered based on a specific gesture on the window, thereby improving convenience of using a split-screen display function by the user.

In some embodiments, as shown in FIG. 13A and FIG. 13B, displaying the partial content of the application in the picture-in-picture area or the floating area includes: displaying the partial content of the application in the picture-in-picture area or the floating area in the split-screen state, and displaying the sixth interface in the second split-screen area; and a process of displaying the interface for complete content of the application in the first split-screen area in response to the eighth operation includes: in response to the eighth operation, displaying the interface for complete content of the application in the first split-screen area, and displaying the sixth interface in the second split-screen area.

In some embodiments, as shown in FIG. 15A and FIG. 15B, displaying the partial content of the application in the picture-in-picture area or the floating area includes: displaying the partial content of the application in the picture-in-picture area or the floating area in the seventh interface; and a process of displaying the interface for complete content of the application in the first split-screen area in response to the eighth operation includes: in response to the eighth operation, displaying the interface for complete content of the application in the first split-screen area, and displaying the seventh interface in the second split-screen area.

An embodiment of this application further provides an electronic device, including a processor and a memory. The memory is configured to store at least one instruction, and when the instruction is loaded and executed by the processor, the electronic device is enabled to perform the display method in any one of the foregoing embodiments. A specific process and principle of the display method may be the same as those in the foregoing embodiments, and details are not described herein again. A specific structure and principle of the electronic device may be the same as those in the foregoing embodiments, and details are not described herein again.

The electronic device in this application may be any product such as a smart television, a mobile phone, a tablet computer, a personal computer (personal computer, PC), a personal digital assistant (personal digital assistant, PDA), a smartwatch, a wearable electronic device, an augmented reality (augmented reality, AR) device, a virtual reality (virtual reality, VR) device, a vehicle-mounted device, an uncrewed aerial vehicle device, an intelligent vehicle, a smart speaker, a robot, or smart glasses.

An embodiment of this application further provides a computer-readable storage medium, including a program or instructions. When the program or the instructions are run on a computer, the method in any one of the foregoing embodiments is performed.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

In embodiments of this application, "at least one" means one or more, and "plurality of" means two or more. "And/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these items, including a single item or any combination of a plurality of items. For example, at least one of a, b, or c may represent a, b, c, a and b, a and c, b and c, or a, b, and c, where a, b, and c may be singular or plural.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A display method, comprising:
displaying a first interface in a first split-screen area, and displaying a second interface in a second split-screen area;
detecting a first operation;
displaying a third interface in response to the first operation, wherein the third interface is used to display a task in a first multi-task list corresponding to the first split-screen area, and the first multi-task list comprises a first task;
detecting a second operation performed on the first task in the third interface; and
displaying an interface of the first task in the first split-screen area in response to the second operation.

2. The method according to claim 1, further comprising:
detecting a third operation;
displaying a fourth interface in response to the third operation, wherein the fourth interface is used to display a task in a second multi-task list corresponding to the second split-screen area, and the second multi-task list comprises a second task;
detecting a fourth operation performed on the second task in the fourth interface; and
displaying an interface of the second task in the second split-screen area in response to the fourth operation.

3. The method according to claim 2, wherein
the first operation is a first operation performed on the first split-screen area;
displaying the third interface comprises: displaying the third interface in the first split-screen area;
the second operation is a second operation performed on the second split-screen area; and
displaying the fourth interface comprises: displaying the fourth interface in the second split-screen area.

4. The method according to claim 2 or 3, further comprising:
detecting a fifth operation;
displaying a fifth interface in response to the fifth operation, wherein the fifth interface is used to display a third task list, the third multi-task list comprises all tasks in the first multi-task list and the second multi-task list, and the third task list comprises a fifth task and a combination of a third task and a fourth task;
if a sixth operation performed on the combination of the third task and the fourth task in the fifth interface is detected,
in response to the sixth operation, displaying an interface of the third task in the first split-screen area, and displaying an interface of the fourth task in the second split-screen area; and
if a seventh operation performed on the fifth task in the fifth interface is detected,
displaying an interface of the fifth task in full screen in response to the seventh operation.

5. The method according to any one of claims 1 to 4, wherein
before displaying the first interface in the first split-screen area, the method further comprises:
displaying the interface of the first task in the first split-screen area, and adding the first task to the first multi-task list.

6. The method according to any one of claims 2 to 5, wherein
before displaying the second interface in the second split-screen area, the method further comprises:
displaying the interface of the second task in the second split-screen area, and adding the second task to the second multi-task list.

7. The method according to any one of claims 1 to 6, further comprising:
displaying partial content of an application in a picture-in-picture area or a floating area;
detecting an eighth operation performed on the picture-in-picture area or the floating area; and
displaying an interface for complete content of the application in the first split-screen area or the second split-screen area in response to the eighth operation.

8. A display method, comprising:
displaying partial content of an application in a picture-in-picture area or a floating area;
detecting an eighth operation performed on the picture-in-picture area or the floating area; and
displaying an interface for complete content of the application in a first split-screen area or a second split-screen area in response to the eighth operation.

9. An electronic device, comprising:
a processor and a memory, wherein the memory is configured to store at least one instruction, and when the instruction is loaded and executed by the processor, the electronic device is enabled to perform the method according to any one of claims 1 to 8.

10. A computer-readable storage medium, comprising a program or instructions, wherein when the program or the instructions are run on a computer, the method according to any one of claims 1 to 8 is performed.
